# EUROPEAN PATENT SPECIFICATION

(11) **EP 0 424 435 B1**
(45) Date of publication and mention of the grant of the patent: **04.07.2001**
(21) Application number: 89907916.4
(22) Date of filing: 26.06.1989
(51) Int. Cl.: B29C 33/10, B29C 45/34, B29D 22/00, B32B 3/20

(54) **PROCESS FOR INJECTION MOLDING**
VERFAHREN ZUM EINSPRITZGIESSFORMEN
PROCEDE DE MOULAGE PAR INJECTION

(30) Priority: 11.07.1988 US 217175
(43) Date of publication of application: 02.05.1991
(73) Proprietor: Melea Limited, Gibraltar (GI)
(72) Inventor: HENDRY, James, W., Brookville, FL 34069 (US)
(74) Representative: Rehders, Jochen, Dipl.-Ing.
(86) International application number: PCT/US89/02815
(87) International publication number: WO 90/00466

(56) References cited:
- EP-A- 0 309 182
- EP-A- 0 309 257
- EP-A- 0 321 117
- DE-A- 3 444 532
- DE-C- 651 725
- GB-A- 2 139 548
- US-A- 2 331 688
- US-A- 3 135 640
- US-A- 4 091 057
- US-A- 4 101 617
- US-A- 4 136 220
- US-A- 4 140 672
- US-A- 4 740 150
- US-A- 4 781 554

## Description

### TECHNICAL FIELD

This invention relates to plastic injection molding and articles produced thereby, and, more particularly, to plastic injection molding and plastic articles having hollow interior portions produced thereby.

### CROSS REFERENCE TO RELATED PATENTS

This application related to European patent 0 298 631, filed 23 June 1988, entitled: "Apparatus and method for injection molding of thermoplastics", claiming priority of US patent 4 781 554, filed 9 July 1987; European patent 0 309 182, filed 19 September 1988 entitled "Method and apparatus for the injection molding of plastic articles", claiming priority of US patent 4 855 094, filed 21 September 1987 and European patent 0 321 117, filed 28 November 1988, entitled "Method and system for localized fluid-assisted injection molding and body formed thereby", claiming priority of US patent 5 069 859, filed 16 December 1987, all of which have the same assignee as the assignee of the present invention and all of which are hereby expressly incorporated by reference.

European patent application 0 321 117 published after the priority date of the present application describes a method and an injection molding system for making a hollow shaped body from a plastic resin in a fluid assisted injection molding system, including a mold having an injection aperture, a body forming cavity, a resin reservoir and a spillover reservoir in communication with the cavity, the method comprising: Injecting an amount of molten resin sufficient for the preparation of the body from an injection nozzle, through the injection aperture, along a resin flow path and into the cavity in the mold, wherein the resin at least partially fills the resin reservoir: injecting fluid into the molten resin in the resin reservoir through at least one fluid aperture in the resin reservoir to at least partially distribute the resin over interior surfaces defining the cavity, and to at least partially fill the spillover reservoir during distribution of the resin over the interior surfaces, whereby the body is formed within a predetermined portion of the cavity; cooling the body so formed to a temperature beneath the softening point of the resin; relieving the pressure within the body and opening the mold to remove the body. Furthermore a plastic hollow body is described formed by a fluid assisted injection molding system including a mold having a body forming cavity and an injection aperture wherein plastic resin is injected through the injection aperture and wherein a fluid is injected into the resin through a separate fluid aperture in the mold to at least partially distribute the resin, whereby a substantially endless, ringshaped hollow body portion is formed within the body by the fluid and wherein the mold has a resin spillover reservoir located substantially opposite the fluid aperture outside the body.

### BACKGROUND ART

In the plastic injection molding art, the usual challenges facing a product designer is to design an article having requisite strength for the product application and uniform surface quality for satisfactory appearance, but to avoid excessive weight, material usage and cycle time. A design compromise must often be made between strength and plastic thickness. A relatively thicker plastic section in the article, such as a structural rib, will incur greater weight, material usage, cycle time and induce sink marks and other surface defects due to thermal gradients in the area of the thickened section.

It is known in the plastic molding art to use pressurized fluid in conjunction with the plastic molding of articles. The pressurized fluid is typically nitrogen gas which is introduced into the mold cavity at or near the completion of the plastic injection. The pressurized fluid serves several purposes. First, it allows the article so formed to have hollow interior portions which correspond to weight and material savings. Second, the pressurized fluid within the mold cavity applies outward pressure to force the plastic against the mold surface while the article solidifies. Third, the cycle time is reduced as the gas migrates through the most fluent inner volume of the plastic and replaces the plastic in these areas which would otherwise require an extended cooling cycle. Fourth, the gas pressure pushes the plastic against the mold surfaces, thereby obtaining the maximum coolant effect from the mold.

However, as the dimensions of the molded article increase, the gas must do more work to migrate through the volume of the mold cavity to assist in setting up the article within the cavity. If the pressure of the gas is too great as it enters the mold cavity, there is a risk that it may rupture or blow out the plastic within the mold cavity, i.e., the gas is not contained within the plastic. Thus, there have been practical limitations in the adaptation of gas injection in the plastic molding field.

US 4 140 672 A1 describes a process for producing moldings which comprises the steps of injecting a plastified synthetic resin into a mold cavity, thereafter or simultaneously injecting heated fluid having a viscosity of 0.01 to 100 poise into the same mold cavity to fill it with said fluid in such a manner that said heated fluid is surrounded by said synthetic resin within said mold cavity and releasing said fluid from said mold cavity after at least a portion of said synthetic resin has set. If the injected synthetic resin contains any foaming agent, a foamed article having an outer smooth skin can be obtained. If the injected synthetic resin contains no foaming agent, a hollow, smooth-surfaced article can be obtained. In one embodiment, the mold cavity is of a cylindrical post-shape with a diameter of 55 mm and a length of 500 mm. The cylindrical post-shaped cavity is provided with a gate formed at the extremity thereof with the other end having a small blind hole formed therein. Rubber toughened polystyrene is injected into the mold cavity through a runner via a gate at 200°C. The core fluids, atactic polypropylene A, atactic polypropylene B, polyethylene glycol A, polyethylene glycol B, polyethylene glycol C, polystyrene A, polystyrene B, glycerin, water and nitrogen gas, are injected at 200°C respectively into each mold cavity into which the above polystyrene is injected. The corresponding composite semi-products have a surface layer of polystyrene and a core of the respective core fluids. After the surface layer of polystyrene is set and when the core fluid is still hot, the composite semi-product is removed from each of the mold cavities. Thereafter the projection of the semi-product is cut off and a heated gas is blown into the interior of the semi-product through the gate to force out the core fluid from the semi-product. Thereby a hollow article is obtained. The core fluids water and nitrogen gas have a viscosity below 0.01 poise and present the disadvantage that it is difficult to form a core having uniform dimensions, and also present safety hazards, because any leakage of such low viscous fluid under high pressure and temperature from a molding machine may expose an operator to a danger such as scald or the like. Hence, US 4 140 672 A1 discloses preferred use of a viscous fluid for forming a core which has a higher viscosity between 0.01 to 100 poise and discourages use of water or nitrogen.

JP-A-SHO 50-74 660 describes a process for molding a sandwich-type formed body, having an outer layer formed from a thermoplastic resin, and a core resin or a gas encapsulated therein. In one embodiment, a sandwich-type formed body, having an outer layer formed from a thermoplastic resin and a core resin encapsulated in the outer layer, is molded by injecting core resin into the cavity by means of a first extruder, whereafter a valve connected to the mold cavity is opened, so that the thermoplastic resin is expelled through the valve out of the cavity when the core resin is injected by means of a second extruder. In case it is desired to mold a separate molded body, a separate mold cavity is provided connected with the main cavity and into which the thermoplastic resin is expelled. Gas like air, nitrogen, carbon dioxide and the like are mentioned, but there is no indication that hollow plastic articles are to be molded instead of sandwich-type formed bodies including a foam core.

### DISCLOSURE OF THE INVENTION

According to the invention there is provided a process for injection molding a hollow plastic article as claimed in claim one. Advantageous embodiments of the invention are defined in dependent claims two to nine.

One aspect of the present invention is a method for injection molding hollow plastic articles with pressurized gas which provides for displacement by the gas of a portion of plastic from the mold cavity into a flow coupled spill cavity. This feature enables plastic articles of relatively greater dimensions to be successfully molded with the advantages of established gas injection molding techniques.

More specifically, the process involves the initial injection of a quantity of fluent plastic into a mold cavity having a shape defining at least a portion of the plastic article to be molded. At or near the completion of the plastic injection, a charge of pressurized gas is introduced into the mold cavity to displace a portion of the still fluent plastic. The displaced plastic flows through a passage from the mold cavity into a connected spill cavity or reservoir. The reservoir may alternatively serve as: (i) an appendage of the complete article; (ii) a separate article; or (iii) a cavity to receive spilled plastic for regrinding. The plastic which is displaced is generally the hottest and most fluent. In this regard, the introduction of the charge of pressurized gas into the mold cavity is timed to modulate the amount of plastic displaced, i.e., the longer the delay in introduction, the cooler and less fluent the plastic in the mold cavity.

In another feature of the invention, the hollow plastic article may be formed with an integral internal wall by introduction of two or more charges of pressurized gas. Each gas charge tends to form a cell within the article, and the cells are divided by membranes which serve as integral internal walls to enhance the structural properties of the article.

In yet still another feature of the inventing, venting of the gas from the mold cavity is accomplished by moving a support mechanism for a portion of the solidified injected plastic to allow the gas to burst through the unsupported plastic portion at the reservoir, the runner or an inconspicuous part of the article itself.

The present invention admits to molding of relatively large size structural articles for use in diverse product fields, such as a box-sectioned frame member for an automobile or refrigerator door or the hood of a car having a reenforcing beam.

Other advantages and features of the present invention will be made apparent in connection with the following description of the best mode for carrying out the invention.

### BRIEF DESCRIPTION OF THE DRAWINGS

FIGURE 1 is a flow chart indicating the basic steps involved in practice of the process of the present invention;
FIGURE 2 is a schematic side view of a plastic injection molding apparatus adapted to carry out the process of the present invention;
FIGURE 3 is a top plan view of the apparatus of FIGURE 2;
FIGURE 4 is another schematic view of a plastic injection molding apparatus illustrating an alternative arrangement for practicing the process of the present invention;
FIGURE 5 is a side schematic view in cross-section showing still another plastic injection molding apparatus adapted to mold a hollow plastic article having an integral internal wall in accordance with the process of the present invention;
FIGURE 6 is a plan view of the apparatus shown schematically in FIGURE 5;
FIGURE 7 is a view similar to FIGURE 5 wherein the internal wall is displaced from the central location of FIGURE 5;
FIGURE 8 is a plan view of the apparatus of FIGURE 7;
FIGURE 9 is a plan view of yet still another plastic injection molding apparatus;
FIGURE 10 is an enlarged side schematic view of the apparatus of FIGURE 9, partially broken away and illustrating one embodiment of a venting step;
FIGURE 11 is a view similar to FIGURE 10 illustrating a second embodiment of the venting step;
FIGURE 12A is a view similar to FIGURE 10 illustrating a third embodiment of the venting step;
FIGURE 12B is a view of the third embodiment after venting;
FIGURE 13A is a view similar to FIGURE 10 illustrating a fourth embodiment of the venting step; and
FIGURE 13B is a view of the fourth embodiment after venting.

### BEST MODE FOR CARRYING OUT THE INVENTION

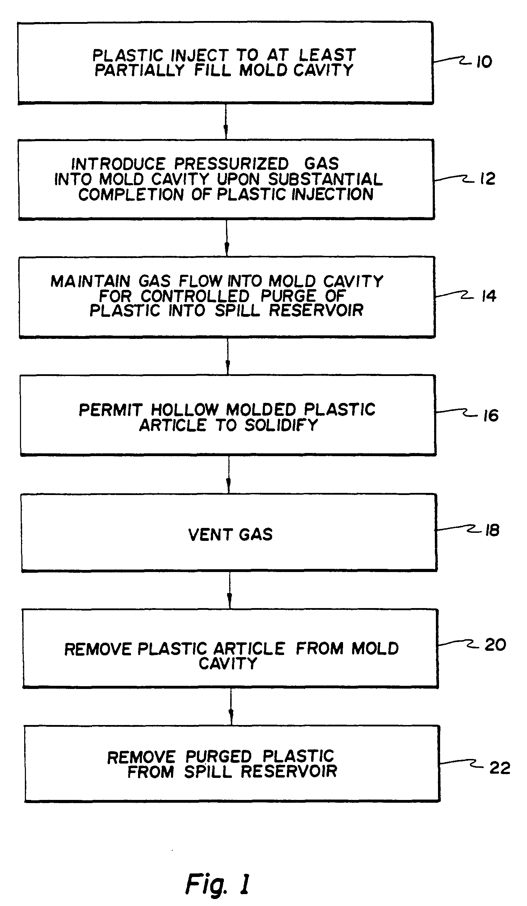

FIGURE 1 is a flow chart of the steps involved in practicing the process of the present invention.

In step 10, a quantity of molten plastic is injected from an injection molding machine into a mold cavity. The plastic is any thermoplastic and works particularly well with glass or mineral filled thermoplastic polyester, commonly known by the trademark Valox of General Electric Co. The quantity is sufficient to provide the mass of the article to be molded, but desirably less than the quantity which would fill the mold cavity.

In step 12, a charge of pressurized gas is introduced into the mold upon substantial completion of the injection of the quantity of molten plastic.

In step 14, the gas flow into the mold is maintained in pressure and duration in amount and time sufficient to displace a controlled quantity of plastic from the mold cavity into a spill cavity which is flow coupled to the mold cavity. The gas tends to displace the hottest, most fluent plastic in the central portion of the mold cavity. Consequently, the molded plastic article has a hollow interior where the least viscous plastic has been displaced. The presence of the gas affords savings in weight and material usage. Added benefits include enhanced surface quality due to the outward pressure exerted by the gas, and reduced cycle time due to displacement of the relatively hot plastic from the central portion of the article.

In step 16, the article is permitted to solidify within the mold cavity while the internal gas pressure is maintained.

In step 18, the pressurized gas is vented from the interior of the molded article preparatory to opening the mold. Numerous ways of venting are possible such as described in the U.S. Patent to Friederich 4 101 617 or as described in European patent 0 298 631 and corresponding US patent 4 781 554 noted above.

In step 20, the plastic article is removed form the mold.

In step 22, the purged or displaced plastic is removed from the spill cavity or reservoir. In certain cases, steps 20 and 22 can be the common operation of ejecting the moldings so formed from the article cavity and the spill cavity.

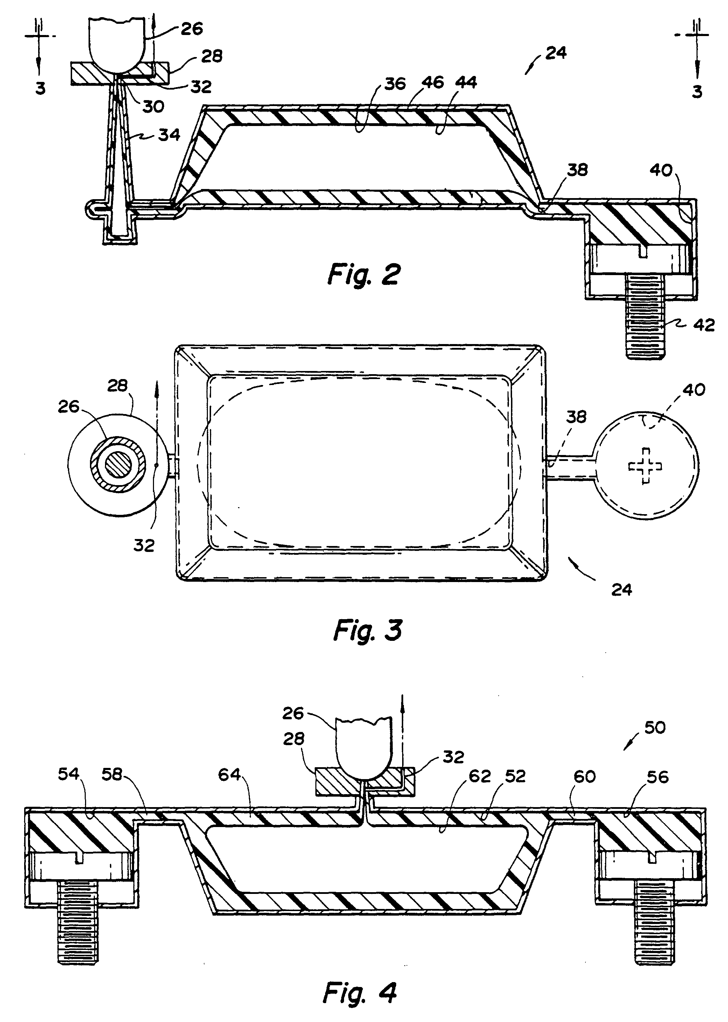

Figures 2 and 3 are schematic side and plan views, respectively, of a plastic injection molding apparatus, generally indicated at 24, adapted to carry out the process of the present invention.

A nozzle 26 of a plastic injection molding machine is brought into registering position with a modified sprue bushing 28 associated with a mold. The sprue bushing 28 may be of the type disclosed in the above-noted European patent 0 309 182 corresponding to US patent 4 855 094. The sprue bushing 28 has a plastic flow path 30 formed at its center to permit the passage of molten plastic through a sprue 34 into a mold cavity 36.

The modified sprue bushing also includes a gas path 32 to permit the introduction and venting of a charge of pressurized gas.

The mold cavity 36 is flow coupled through a runner segment 38 to a spill cavity 40. The volume of the spill cavity 40 may be varied by any well-known means to control the quantity of displaced plastic such as by a lead screw 42.

A molded article 46 produced by the process described in reference to Figure 1 includes an interior void 44 formed by the presence and influence of the pressurized gas. The spill cavity 40 may be formed to mold an integral appendage of the article 46, or a separate article, or simply scrap for regrinding.

FIGURE 4 is another schematic view of a plastic injection molding apparatus, generally indicated at 50, illustrating an alternative arrangement for practicing the process of the present invention. In this case, the apparatus 50 employs first and second spill cavities 54 and 56 which are flow coupled through runners 58 and 60, respectively, to a mold volume 52. Again, a nozzle 26 from an injection molding machine registers with the sprue bushing 28 to inject a quantity of molten plastic into the mold cavity. A charge of pressurized gas flows along the gas path 32 in the modified sprue bushing 28 and into the cavity 52 to displace the least viscous plastic from the mold cavity 52 into the first and second spill cavities 54 and 56. This process, when performed in accordance with the steps of FIGURE 1, will yield a molded article 64 having a central void 62 due to the displacement of plastic by the pressurized gas.

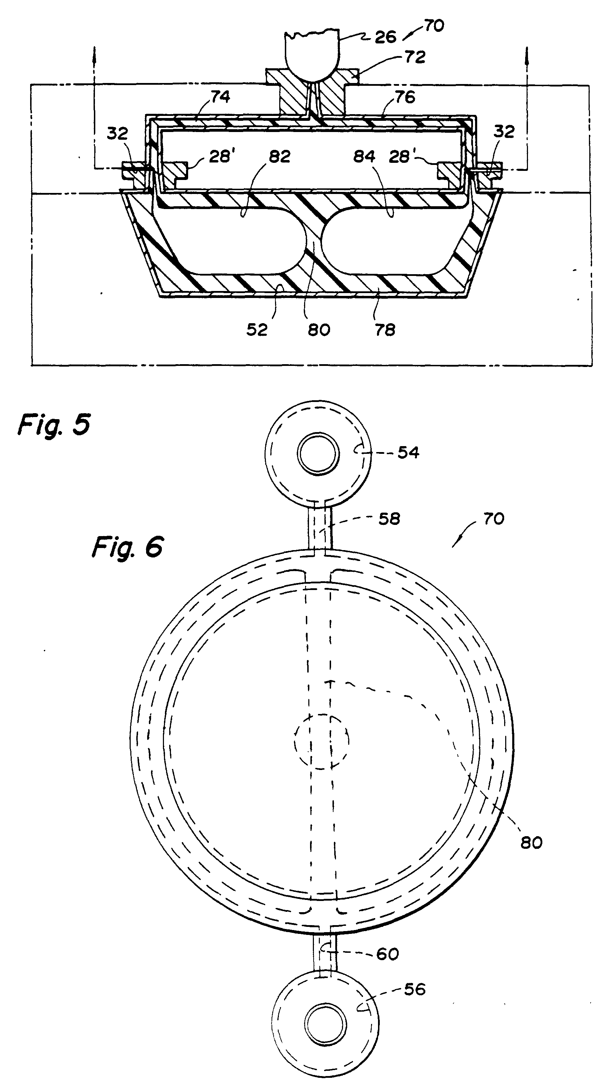

FIGURES 5 and 6 are side and plan schematic views, respectively, of still another plastic injection molding apparatus, generally indicated at 70, adapted to mold a hollow plastic article 78 having an integral internal wall 80. In this case, the injection molding machine nozzle 26 aligns with a sprue 72 which divides into a pair of runners 74 and 76. Each of the runners 74 and 76 connects to a bushing 28', which is modified from the sprue bushing 28 of FIGURE 1 only to the extent required to remove it to the ends of the runners 74 and 76. In this example, the pair of bushings 28' are situated at opposite lateral extremes of the mold cavity 52 to produce a molded article 78 with an integral internal wall 80 at the center. The positioning of the bushings 28', as defining the gas entry points, will determine the resulting position of the integral internal wall 80.

In the apparatus 70 of FIGURES 5 and 6, the gas charges introduced through the paths 32 in the bushings 28' are simultaneous. Each gas charge tends to form a cell, as shown by voids 82 and 84, within the article 78. The cells are divided by a membrane which serves an integral internal wall 80.

In other respects the apparatus 70 of FIGURES 5 and 6 is essentially similar to the apparatus 50 of FIGURE 4. Specifically, the apparatus 70 likewise employs first and second spill cavities 54 and 56 flow coupled to the mold cavity 52 through runners 58 and 60, respectively.

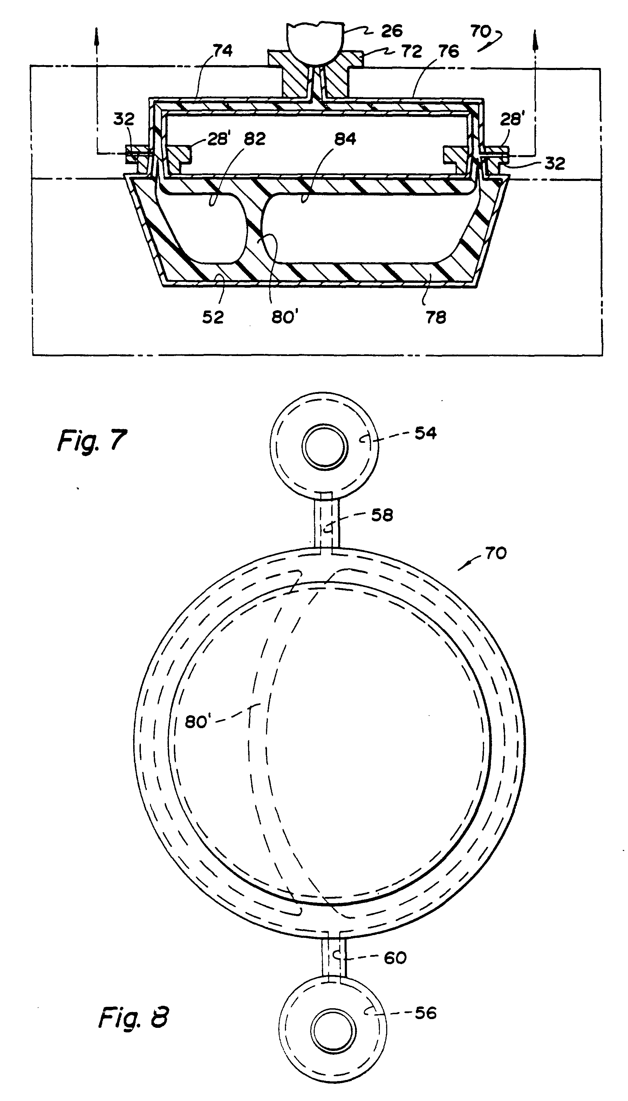

In the apparatus 70 of FIGURES 7 and 8, the gas charges introduced through the paths 32 in the bushings 28' are sequential so that the membrane which serves as an integral wall 80' is displaced to one side. For example, the interval between the gas charges may be between .25 and 1.0 seconds apart.

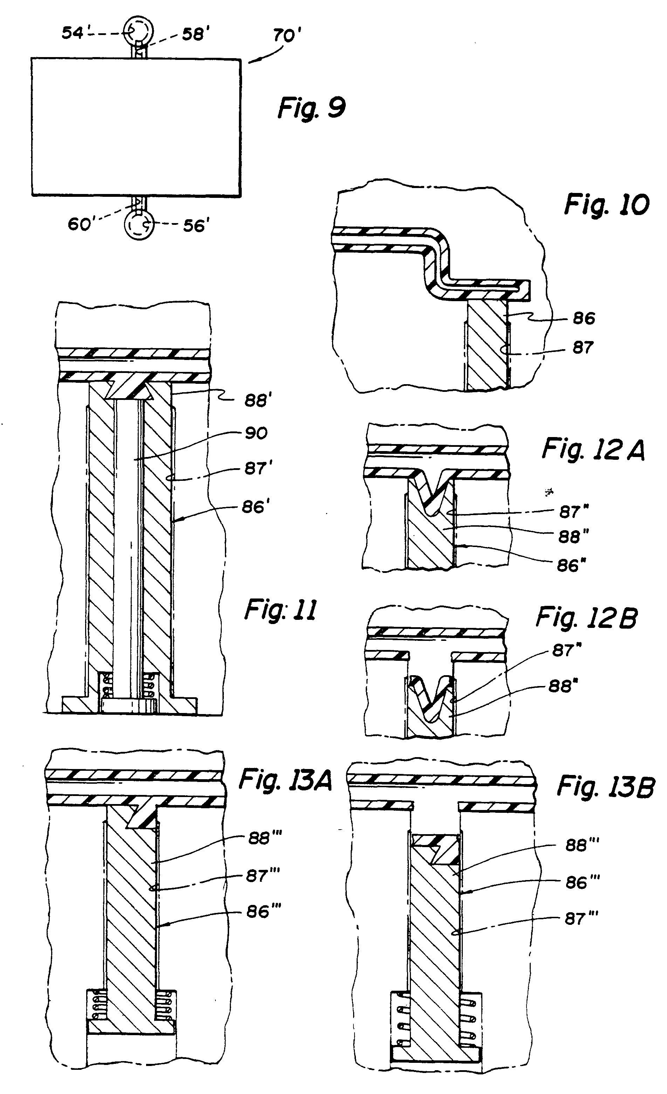

FIGURES 9 and 10 are plan and side schematic views, respectively, of another plastic injection molding apparatus, generally indicated at 70', adapted to mold a hollow plastic article. The apparatus 70' employs spill cavities 54' and 56' coupled to the mold cavity through runners 58' and 60', respectively.

The plastic in at least one of the spill cavities 54' and 56' is supported during plastic solidification by a movable mold part such as a pin 86 supported within the mold of the apparatus 70'. The gas is vented by moving the pin away from the supported plastic prior to opening the mold to the atmosphere so that the pressurized gas bursts through the now unsupported plastic within the spill cavity. The gas then travels around the pin 86, through the mold and to the atmosphere in a controlled fashion. The pin 86 may be moved relative to the mold in any well-known fashion and is supported in a bore 87 in the mold leaving approximately 0,125 mm (0.005 inches) clearance around the pin 86 to permit the gas to travel around the pin 86.

FIGURES 11, 12A and 13B show alternate embodiments of a pin, generally indicated at 86', 86" and 86'", respectively, for venting the gas from the article. FIGURES 12B and 13B show the pins 86" and 86'" in their venting positions, respectively. Each of the pins 86', 86" and 86'" include an angled end portion 88', 88" and 88'", respectively, for receiving and retaining a portion of the solidified injected plastic therein at a plastic reservoir, a runner segment, a sprue portion or an inconspicuous part of the article itself. Movement of the pins 86', 86" and 86'" away from their respective supported portions of injected plastic causes their respective end portions 88', 88" and 88"' to carry a portion of plastic therewith to facilitate the venting step, as illustrated in FIGURES 12B and 13B.

In the embodiment of FIGURE 11, the pin 86' includes a central ejector 90 which can be operated in any well-known fashion to subsequently eject the solidified plastic from the end portion 88' after venting and prior to the next cycle.

The invention has been described in illustrative embodiments, but it will be evident to those skilled in the art that variations may be made from the foregoing teachings without departing from the scope of the following claims.

## Claims

1. A process for injection molding a hollow plastic article comprising the steps of:
- injecting a quantity of fluent plastic into a mold cavity having a shape defining at least a portion of the article;
- displacing a portion of the plastic from the mold cavity into a spill cavity flow coupled to the mold cavity by introduction of a charge of pressurized gas into the mold cavity, said introduction of the charge of pressurized gas being timed to modulate the amount of plastic displaced;
- permitting the injected plastic to solidify;
- venting the gas from the mold cavity; and
- removing the plastic article from the mold.

2. The process as claimed in claim 1 for injection molding a hollow plastic article (78) having an integral internal wall (80; 80') comprising the steps of:
introducing first and second charges of gas into the mold cavity (52) at spaced locations and at pressures sufficient to displace quantities of plastic into oppositely disposed spill cavities (54, 56; 54', 56') flow coupled to the mold cavity;
creating interior voids (82, 84) divided by a membrane which serves as an integral internal wall (80; 80') within the molded article (78).

3. The process as claimed in claim 2 wherein the first and second charges of gas are introduced into the mold cavity (52) substantially simultaneously.

4. The process as claimed in claim 2 wherein the first and second charges of gas are introduced into the mold cavity (52) in a predetermined sequence.

5. The process as claimed in any one of claims 1 to 4, wherein a portion of the injected plastic is supported within the mold by a movable support means (86; 86', 86''; 86''') of the mold during plastic solidification and wherein the step of venting is accomplished by moving the support means (86; 86'; 86''; 86''') to a non-support position to allow the gas to burst through the thereby unsupported plastic portion.

6. The process as claimed in claim 5 wherein the support means (86'; 86''; 86''') includes an angled end portion for receiving and retaining the portion of the injected plastic therein and wherein movement of the support (86'; 86''; 86''') towards the non-support position removes the portion of the injected plastic from the rest of the injected plastic.

7. The process as claimed in claim 5 wherein the mold has a spill cavity (54', 56') coupled to the mold cavity and wherein the portion of the injected plastic is located in the spill cavity (54', 56').

8. The process as claimed in claim 6 wherein the mold has a runner segment (74, 76) coupled to the mold cavity (52) and wherein the portion of the injected plastic is located in the runner segment (74, 76).

9. The process as claimed in claim 6 wherein the support means (86'; 86'', 86''') includes a movable pin having extended and retracted positions for removing the portion of the injected plastic from the angled end portion in the extended position of the pin.

## Patentansprüche

1. Verfahren zum Spritzgießen eines hohlen Kunststoffgegenstandes mit den Schritten:
- Einspritzen einer flüssigen Kunststoffmenge in einen Formhohlraum mit einer Gestalt, die wenigstens einen Teil des Gegenstandes bestimmt;
- Verdrängen eines Teils des Kunststoffs aus dem Formhohlraum in einen in Fließverbindung mit dem Formhohlraum stehenden Überlaufhohlraum durch Einbringen einer Füllung eines unter Druck gesetzten Gases in den Formhohlraum, wobei das Einbringen der Füllung des unter Druck gesetzten Gases zeitlich gesteuert ist, um die Menge des verdrängten Kunststoffs einzustellen;
- sich Verfestigenlassen des eingespritzten Kunststoffs;
- Entlüften des Gases aus dem Formhohlraum;
- Entformen des Kunststoffgegenstandes aus der Form.

2. Verfahren nach Anspruch 1 zum Spritzgießen eines hohlen Kunststoffgegenstandes (78) mit einer einstückigen, inneren Wand (80; 80') mit den Schritten:
- Einbringen von ersten und zweiten Gasfüllungen in den Formhohlraum (52) an beabstandeten Stellen und mit ausreichenden Drücken, um Kunststoffmengen in einander gegenüberliegend angeordnete Überlaufhohlräume (54, 56; 54', 56'), die mit dem Formhohlraum in Fließverbindung stehen, zu verdrängen;
- Herstellen von inneren, durch eine Membrane, die als einstückige innere Wand (80; 80') innerhalb des geformten Gegenstandes (78) dient, unterteilten Hohlräumen (82, 84).

3. Verfahren nach Anspruch 2, bei dem die ersten und zweiten Gasfüllungen in den Formhohlraum (52) im wesentlichen gleichzeitig eingebracht werden.

4. Verfahren nach Anspruch 2, bei dem die ersten und zweiten Gasfüllungen in den Formhohlraum (52) in vorbestimmter zeitlicher Abfolge eingebracht werden.

5. Verfahren nach einem der Ansprüche 1 bis 4, bei dem ein Teil des eingespritzten Kunststoffs innerhalb der Form durch eine bewegliche Unterstützungseinrichtung (86; 86', 86", 86''') der Form während der Verfestigung des Kunststoffs unterstützt wird und bei dem der Schritt des Entlüftens durch Bewegen der Unterstützungseinrichtung (86; 86', 86"; 86"') in eine nicht unterstützende Stellung bewerkstelligt wird, wodurch das Gas durch den nicht mehr unterstützten Kunststoffbereich durchbrechen kann.

6. Verfahren nach Anspruch 5, bei dem die Unterstützungseinrichtung (86'; 86"; 86''') einem abgewinkelten Endbereich zur Aufnahme und zum Halten eines Teils des eingespritzten Kunststoffs umfaßt, wobei die Bewegung der Unterstützungseinrichtung (86'; 86"; 86"') in die nicht unterstützende Stellung einen Teil des eingespritzten Kunststoffs vom Rest des eingespritzten Kunststoffs entfernt.

7. Verfahren nach Anspruch 5, bei dem die Form einen mit der Form verbundenen Überlaufhohlraum (54', 56') aufweist, wobei sich ein Teil des eingespritzten Kunststoffs in dem Überlaufhohlraum (54', 56') befindet.

8. Verfahren nach Anspruch 6, bei dem die Form einen mit dem Formhohlraum (52) verbundenen Verteilerkanal (74, 76) aufweist und sich der Teil des eingespritzten Kunststoffs im Verteilerkanal (74, 76) befindet.

9. Verfahren nach Anspruch 6, bei dem die Unterstützungseinrichtung (86'; 86"; 86''') einen beweglichen, eine vorgeschobene und eine zurückgezogene Stellung zum Entfernen des eingespritzten Kunststoffs vom abgewinkelten Endbereich in der vorgeschobenen Stellung aufweisenden Stift umfaßt.

## Revendications

1. Procédé de moulage par injection d'un article creux en matière plastique comportant les étapes consistant à :
- injecter une quantité de matière plastique fluide dans une cavité de moule ayant une forme définissant au moins une partie de l'article,
- déplacer une partie de la matière plastique de la cavité de moule dans une cavité de déversement reliée par écoulement à la cavité de moule, en introduisant une charge de gaz sous pression dans la cavité de moule, ladite introduction de la charge de gaz sous pression étant minutée pour moduler la quantité de matière plastique déplacée,
- permettre à la matière plastique injectée de se solidifier,
- mettre à l'air libre le gaz provenant de la cavité de moule, et
- enlever l'article en matière plastique du moule.

2. Procédé de moulage par injection d'un article creux en matière plastique (78) ayant une paroi intérieure en un seul bloc (80 ; 80') selon la revendication 1, comportant les étapes consistant à :
- introduire des première et seconde charges de gaz dans la cavité de moule (52) à des emplacements éloignés et à des pressions suffisantes pour déplacer des quantités de matière plastique dans des cavités de déversement disposées de manière opposée (54, 56 ; 54', 56') reliées par écoulement à la cavité de moule,
- créer des vides intérieurs (82, 84) séparés par une membrane qui sert de paroi intérieure en un seul bloc (80 ; 80') à l'intérieur de l'article moulé (78).

3. Procédé selon la revendication 2, dans lequel les première et seconde charges de gaz sont introduites dans la cavité de moule (52) sensiblement simultanément.

4. Procédé selon la revendication 2, dans lequel les première et seconde charges de gaz sont introduites dans la cavité de moule (52) selon une séquence prédéterminée.

5. Procédé selon l'une quelconque des revendications 1 à 4, dans lequel une partie de la matière plastique injectée est supportée à l'intérieur du moule par des moyens de support mobiles (86 ; 86', 86" ; 86"') du moule lors de la solidification de la matière plastique, et dans lequel l'étape de mise à l'air libre est accomplie en déplaçant les moyens de support (86 ; 86'; 86" ; 86"') vers une position de non-support pour permettre au gaz de jaillir à travers la partie de matière plastique ainsi non-supportée.

6. Procédé selon la revendication 5, dans lequel les moyens de support (86' ; 86" ; 86"') comportent une partie d'extrémité inclinée destinée à recevoir et à retenir la partie de matière plastique injectée dans celle-ci, et dans lequel le déplacement du support (86' ; 86" ; 86"') en direction de la position de non-support enlève la partie de matière plastique injectée du reste de la matière plastique injectée.

7. Procédé selon la revendication 5, dans lequel le moule a une cavité de déversement (54', 56') reliée à la cavité de moule, et dans lequel la partie de la matière plastique injectée est positionnée dans la cavité de déversement (54', 56').

8. Procédé selon la revendication 6, dans lequel le moule a un segment formant canal de coulée (74, 76) relié à la cavité de moule (52), et dans lequel la partie de la matière plastique injectée est positionnée dans le segment formant canal de coulée (74, 76).

9. Procédé selon la revendication 6, dans lequel les moyens de support (86' ; 86" ; 86"') comportent une broche mobile ayant une position étendue et une position rétractée, pour enlever la partie de la matière plastique injectée de la partie d'extrémité inclinée dans la position étendue de la broche.
